# EUROPÄISCHE PATENTANMELDUNG

(11) **EP 1 640 598 A1**
(43) Veröffentlichungstag der Anmeldung: **29.03.2006**
(21) Anmeldenummer: 04104600.4
(22) Anmeldetag: 22.09.2004
(51) Int. Cl.: F02M 25/07, F02B 37/013, F01N 3/20

(54) **Aufgeladene Brennkraftmaschine und Verfahren zur Verbesserung des Emissionsverhaltens einer aufgeladenen Brennkraftmaschine**

(71) Anmelder: Ford Global Technologies, LLC, A subsidary of Ford Motor Company, Dearborn, MI 48126 (US)
(72) Erfinder: Schorn, Norbert, 52080, Aachen (DE); Kindl, Matthias, 52066, Aachen (DE); Spaeder, Uwe, 52066, Aachen (DE)
(74) Vertreter: Dörfler, Thomas

(57) **Zusammenfassung**

Die Erfindung betrifft eine aufgeladene Brennkraftmaschine (1) mit einer Ansaugleitung (2) zur Versorgung mit Frischluft und einer Abgasleitung (4) zur Abführung des Abgases und mit mindestens zwei in Reihe geschalteten Abgasturboladern (6,7), die jeweils eine in der Abgasleitung (4) angeordnete Turbine (6a,7a) und einen in der Ansaugleitung (2) angeordneten Verdichter (6b,7b) umfassen und von denen ein erster Abgasturbolader (6) als Hochdruckstufe (6) dient und ein zweiter stromabwärts der Abgasleitung (4) bzw. stromaufwärts der Ansaugleitung (2) des ersten Abgasturboladers (6) angeordneter Abgasturbolader (7) als Niederdruckstufe (7) dient, wobei stromabwärts der Turbine (7a) des zweiten Abgasturboladers (7) ein erstes Abgasnachbehandlungssystem (8a) vorgesehen ist und zusätzlich ein gleichartiges zweites Abgasnachbehandlungssystem (8b) vorgesehen ist. Hierbei ist das zweite Abgasnachbehandlungssystem (8b) in der Abgasleitung (4) zwischen den beiden Turbinen (6a,7a) der mindestens zwei Abgasturbolader (6,7) angeordnet.

## Beschreibung

Die Erfindung betrifft eine aufgeladene Brennkraftmaschine mit einer Ansaugleitung zur Versorgung mit Frischluft und einer Abgasleitung zur Abführung des Abgases und mit mindestens zwei in Reihe geschalteten Abgasturboladern, die jeweils eine in der Abgasleitung angeordnete Turbine und einen in der Ansaugleitung angeordneten Verdichter umfassen und von denen ein erster Abgasturbolader als Hochdruckstufe dient und ein zweiter stromabwärts der Abgasleitung bzw. stromaufwärts der Ansaugleitung des ersten Abgasturboladers angeordneter Abgasturbolader als Niederdruckstufe dient, wobei stromabwärts der Turbine des zweiten Abgasturboladers ein erstes Abgasnachbehandlungssystem vorgesehen ist und zusätzlich ein gleichartiges zweites Abgasnachbehandlungssystem vorgesehen ist.

Des weiteren betrifft die Erfindung ein Verfahren zur Verbesserung des Emissionsverhaltens einer aufgeladenen Brennkraftmaschine der oben genannten Art.

Im Rahmen der vorliegenden Erfindung umfasst der Begriff Brennkraftmaschine sowohl Dieselmotoren als auch Ottomotoren.

In den letzten Jahren hat sich eine Entwicklung hin zu kleinen, hochaufgeladenen Motoren vollzogen, wobei die Aufladung in erster Linie ein Verfahren zur Leistungssteigerung ist, bei dem die für den motorischen Verbrennungsprozess benötigte Luft verdichtet wird. Die wirtschaftliche Bedeutung dieser Motoren für die Automobilbauindustrie nimmt weiter ständig zu.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Vorteile des Abgasturboladers beispielsweise im Vergleich zu mechanischen Ladern besteht darin, dass keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der durch die Brennkraftmaschine an der Kurbelwelle bereitgestellten mechanischen Energie bezieht und somit die bereitgestellte Leistung mindert und auf diese Weise den Wirkungsgrad nachteilig beeinflusst, nutzt der Abgasturbolader die Energie der von der Brennkraftmaschine erzeugten heißen Abgase. Auch hier kann eine Reduktion des Wirkungsgrades auftreten, da der Abgasgegendruck im Vergleich zum Saugmotor erhöht wird.

Ein typischer Vertreter der kleinen, hochaufgeladenen Motoren ist eine Brennkraftmaschine mit Abgasturboaufladung, bei der die Abgasenergie zur Verdichtung der Verbrennungsluft eingesetzt wird, und die zusätzlich über eine Ladeluftkühlung verfügt, mit der die komprimierte Verbrennungsluft vor Eintritt in den Brennraum gekühlt und somit die Dichte der Verbrennungsluft erhöht wird.

Wie oben bereits ausgeführt, hat in den letzten Jahren der Einsatz von Abgasturboladern stark zugenommen, wobei ein Ende dieser Entwicklung nicht abzusehen ist. Die Gründe hierfür sind vielschichtig und werden im folgenden kurz dargelegt.

Die Aufladung dient in erster Linie der Leistungssteigerung der Brennkraftmaschine. Die für den Verbrennungsprozess benötigte Luft wird dabei verdichtet, wodurch jedem Zylinder pro Arbeitsspiel eine größere Luftmasse zugeführt werden kann. Dadurch können die Kraftstoffmasse und damit der Mitteldruck pₘₑ gesteigert werden.

Die Aufladung ist daher ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen lässt sich so das Lastkollektiv zu höheren Lasten hin verschieben.

Die Aufladung unterstützt folglich das ständige Bemühen in der Entwicklung von Verbrennungsmotoren, aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, den Kraftstoffverbrauch zu minimieren, d.h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflusst werden. Die Emissionen an Kohlendioxid, die direkt mit dem Kraftstoffverbrauch korrelieren, nehmen mit sinkendem Kraftstoffverbrauch ebenfalls ab.

Die Drehmomentcharakteristik einer aufgeladenen Brennkraftmaschine kann besipielsweise durch eine Registeraufladung verbessert werden. Dabei werden mehrere parallel geschaltete Turbolader mit entsprechend kleinen Turbinenquerschnitten mit steigender Last zugeschaltet.

Schließlich kann die Drehmomentcharakteristik auch mittels mehrerer in Reihe geschalteter Abgasturbolader vorteilhaft beeinflusst werden, wie dies der Fall ist bei der Brennkraftmaschine, die Gegenstand der vorliegenden Erfindung ist. Durch das in Reihe Schalten mehrerer Abgasturbolader kann das einhüllende virtuelle Verdichterkennfeld der Einzelkennfelder in vorteilhafter Weise verbreitert werden und zwar sowohl hin zu kleineren Verdichterströmen als auch hin zu größeren Verdichterströmen. Insbesondere ist ein Verschieben der Pumpgrenze zu kleineren Massenströmen möglich, wodurch auch bei kleinen Motordrehzahlen und damit kleinen Massenströmen hohe Ladedruckverhältnisse erzielt werden können, und die Drehmomentcharakteristik in diesem Bereich deutlich verbessert werden kann.

Zwei in Reihe geschaltete Abgasturbolader bieten aber darüber hinaus noch weitere Vorteile. Die Leistungssteigerung durch Aufladung kann weiter erhöht werden, das Downsizing wird durch eine mehrstufige Aufladung mittels Abgasturboladern weiter fortgeführt. Des weiteren ist das Ansprechverhalten einer derartig aufgeladenen Brennkraftmaschine deutlich verbessert gegenüber einer vergleichbaren Brennkraftmaschine mit einstufiger Aufladung. Der Grund hierfür ist darin zu finden, dass der für den unteren Drehzahlbereich vorzugsweise verwendete kleinere Abgasturbolader weniger träge ist als ein großer Abgasturbolader bzw. das Laufzeug sich schneller beschleunigen und verzögern lässt.
Eine Brennkraftmaschine gemäß dem Oberbegriff des Anspruches 1 - d.h. der gattungsbildenden Art - mit zwei in Reihe geschalteten Abgasturboladern wird beispielsweise in der europäischen Patentanmeldung EP 1 396 619 A1 beschrieben. Der Turbinenlaufraddurchmesser der Niederdruckturbine ist dabei größer ausgeführt als der Laufraddurchmesser der Hochdruckturbine.

Der Abgasstrom ist mittels geeigneter Umschalteinrichtungen und Bypassleitungen in der Art lenkbar, dass er an beiden Turbinen vorbei geführt werden kann. Dies bietet hinsichtlich eines in der Abgasleitung stromabwärts der Turbinen angeordneten Katalysators - insbe sondere nach einem Kaltstart bzw. in der Warmlaufphase der Brennkraftmaschine - Vorteile, da die heißen Abgase direkt dem Katalysator zugeführt werden und nicht erst unter Wärmeabgabe durch die als Temperatursenke anzusehenden Turbinen geleitet werden. Auf diese Weise erreicht der Katalysator nach einem Kaltstart bzw. in der Warmlaufphase schneller seine Anspringtemperatur, die bei etwa 300°C liegt und dadurch gekennzeichnet ist, dass ein spürbarer Anstieg in der Konvertierung der Schadstoffe zu beobachten ist.

Die europäische Patentanmeldung EP 1 396 619 A1 spricht damit einen Konflikt an, der sich bei der gleichzeitigen Verwendung von Abgasturboladern und Abgasnachbehandlungssystemen einstellt und nach dem Stand der Technik nur unzureichend aufgelöst werden kann.

Einerseits ist man bemüht, den bzw. die Abgasturbolader möglichst nahe am Auslass der Brennkraftmaschine anzuordnen, um auf diese Weise die Abgasenthalpie der heißen Abgase optimal zu nutzen. Andererseits sollen aber auch die heißen Abgase einen möglichst kurzen Weg zu den verschiedenen Abgasnachbehandlungssystemen zurücklegen müssen, damit diesen Abgasen wenig Zeit zur Abkühlung eingeräumt wird und die Abgasnachbehandlungssysteme möglichst schnell ihre Betriebstemperatur bzw. Anspringtemperatur erreichen. In diesem Zusammenhang ist man daher auch grundsätzlich bemüht, die thermische Trägheit des Teilstücks der Abgasleitung zwischen Auslass und Abgasnachbehandlungssystem zu minimieren, was durch Reduzierung der Masse und der Länge dieses Teilstückes erreicht werden kann.

Zur Verbesserung des Emissionsverhaltens schlägt die europäische Patentanmeldung EP1 396 619 A1 vor, einen zweiten Katalysator d.h. ein zweites Abgasnachbehandlungssystem, welches dem ersten Abgasnachbehandlungssystem gleichartig ist, in einer die Turbinen umgehenden Bypassleitung anzuordnen, um auf diese Weise das Abgasleitungsteilstück zwischen dem Auslass der Brennkraftmaschine und dem Katalysator in der Länge zu verkürzen. Die thermische Trägheit dieses Teilstückes wird durch Eliminierung der Turbinen zusätzlich gesenkt.

Nachteilig an dem in der EP 1 396 619 A1 vorgeschlagenem Konzept ist, dass der Abgasstrom entweder im Hinblick auf ein gutes Emissionsverhalten direkt einer Abgasnachbehandlung zugeführt wird, wobei eine Aufladung der Brennkraftmaschine infolge der Umgehung der Abgasturbolader bzw. der Turbinen unterbleibt. Oder aber die Aufladung der Brennkraftmaschine wird in den Vordergrund gestellt, wobei das Emissionsverhalten vernachlässigt wird.

Des weiteren ist das gesamte Abgasleitungssystem aufgrund der zahlreichen Bypassleitungen und zusätzlichen Abgasleitungen sehr komplex und voluminös und daher auch kostenintensiv. Ein derartiges Abgassystem steht dem grundsätzlichen Ziel der Konstrukteure entgegen, im Motorraum des Kraftfahrzeuges ein möglichst effektives d.h. dichtes Packaging der gesamten Antriebseinheit zu realisieren.

An dieser Stelle soll darauf hingewiesen werden, dass die vorliegende Erfindung im Gegensatz zu der europäischen Patentanmeldung EP 1 396 619 A1 nicht auf Katalysatoren beschränkt ist, sondern Abgasnachbehandlungssysteme im allgemeinen zum Gegenstand hat.

Die am Beispiel des Katalysators beschriebene Problematik stellt sich auf ähnliche Weise auch bei anderen Abgasnachbehandlungssystemen ein. Sowohl die für Dieselmotoren verwendeten Oxidationskatalysatoren als auch die bei Ottomotoren eingesetzten Drei-Wege-Katalysatoren benötigen eine bestimmte Betriebstemperatur, um die Schadstoffe in ausreichendem Maße zu konvertieren und die Schadstoffemissionen spürbar zu reduzieren.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration des Filters intermittierend verbrannt werden. Die Intervalle der Regeneration werden dabei durch den Abgasgegendruck, der sich infolge des zunehmenden Strömungswiderstandes des Filters aufgrund der anwachsenden Partikelmasse im Filter einstellt, bestimmt.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muss auf zusätzliche Maßnahmen zurückgegriffen werden, um eine Regeneration des Filters unter allen Betriebsbedingungen zu gewährleisten.

Die Verbrennung der Partikel kann dabei durch eine Nacheinspritzung von zusätzlichem Kraftstoff in den Brennraum unterstützt bzw. initiiert werden. Dabei kann der nacheingespritzte Kraftstoff bereits im Brennraum gezündet werden, was durch die auslaufende Hauptverbrennung oder die gegen Ende der Verbrennung im Brennraum vorliegenden hohen Temperaturen geschehen kann, so dass die Abgastemperatur der in den Abgastrakt ausgeschobenen Abgase innermotorisch angehoben wird. Nachteilig an dieser Vorgehensweise sind insbesondere die im Abgastrakt auf dem Weg zum Filter zu befürchtenden Wärmeverluste und die damit verbundene Temperaturabsenkung der heißen Abgase. Aus diesem Grunde ergibt sich bei der Verwendung eines Partikelfilter ebenfalls die Forderung nach einer möglichst nahen Anordnung des Filters am Auslass der Brennkraftmaschine.

Vor diesem Hintergrund ist es die Aufgabe der vorliegenden Erfindung, eine aufgeladene Brennkraftmaschine der gattungsbildenden Art bereitzustellen, mit der die nach dem Stand der Technik bekannten Nachteile überwunden werden, und die über ein verbessertes Emissionsverhalten verfügt, insbesondere während der Warmlaufphase.

Eine weitere Teilaufgabe der vorliegenden Erfmdung ist es, ein Verfahren zur Verbesserung des Emissionsverhaltens einer aufgeladenen Brennkraftmaschine der oben genannten Art aufzuzeigen.

Gelöst wird die erste Teilaufgabe durch eine aufgeladene Brennkraftmaschine mit einer Ansaugleitung zur Versorgung mit Frischluft und einer Abgasleitung zur Abführung des Abgases und mit mindestens zwei in Reihe geschalteten Abgasturboladern, die jeweils eine in der Abgasleitung angeordnete Turbine und einen in der Ansaugleitung angeordneten Verdichter umfassen und von denen ein erster Abgasturbolader als Hochdruckstufe dient und ein zweiter stromabwärts der Abgasleitung bzw. stromaufwärts der Ansaugleitung des ersten Abgasturboladers angeordneter Abgasturbolader als Niederdruckstufe dient, wobei stromabwärts der Turbine des zweiten Abgasturboladers ein erstes Abgasnachbehandlungssystem vorgesehen ist und zusätzlich ein gleichartiges zweites Abgasnachbehandlungssystem vorgesehen ist, und die dadurch gekennzeichnet ist, dass das zweite Abgasnachbehandlungssystem in der Abgasleitung zwischen den beiden Turbinen der mindestens zwei Abgasturbolader angeordnet ist.

Die erfmdungsgemäße Brennkraftmaschine ist mit einem zweiten Abgasnachbehandlungssystem, das dem ersten Abgasnachbehandlungssystem gleichartig ist, ausgestattet, wobei dieses zweite Abgasnachbehandlungssystem - im Gegensatz zu dem in der europäischen Patentanmeldung EP 1 396 619 A1 beschriebenen Konzept - nicht in einer die Turbinen umgehenden Bypassleitung, sondern zwischen den beiden Turbinen der mindestens zwei Abgasturbolader angeordnet ist.

Damit gewährleistet die erfindungsgemäße Brennkraftmaschine in der Warmlaufphase bzw. nach einem Kaltstart ein verbessertes Emissionsverhalten durch die nahe Anordnung des Abgasnachbehandlungssystems am Auslass der Brennkraftmaschine und darüber hinaus gestattet diese Brennkraftmaschine eine gleichzeitige Aufladung.

Dadurch wird die erste der Erfindung zugrunde liegende Aufgabe gelöst, nämlich eine aufgeladene Brennkraftmaschine bereitzustellen, die über ein verbessertes Emissionsverhalten, insbesondere über ein im Hinblick auf die Emissionen verbessertes Warmlaufverhalten verfügt.

Zusätzliche Abgasleitungen sind infolge der Anordnung des zweiten Abgasnachbehandlungssystems zwischen den Turbinen grundsätzlich nicht erforderlich.

Wegen dieser erfmdungsgemäßen Anordnung des zweiten Abgasnachbehandlungssystems ist das gesamte Abgasrohrsystem dem Abgasrohrsystem einer herkömmlichen Brennkraftmaschine, bei der zwei Abgasturbolader in Reihe geschaltet sind und stromabwärts der Niederdruckturbine ein Abgasnachbehandlungssystem vorgesehen ist, sehr ähnlich und nicht komplexer bzw. voluminöser als dieses herkömmliche Rohrsystem. Hinsichtlich des Packaging ergeben sich daher ebenfalls keine Nachteile.
Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen eine erste Bypassleitung vorgesehen ist, die stromaufwärts der Turbine des ersten Abgasturboladers von der Abgasleitung abzweigt und stromabwärts des zweiten Abgasnachbehandlungssystems wieder in die Abgasleitung mündet, wobei in dieser ersten Bypassleitung ein Absperrelement angeordnet ist. Das Absperrelement ist dabei vorzugsweise stufenlos verstellbar.

Die Bypassleitung gestattet die Umgehung der Hochdruckturbine mitsamt dem stromabwärts dieser Turbine angeordnetem Abgasnachbehandlungssystem. Dies ermöglicht beispielsweise die gezielte Auslegung der Hochdruckturbine auf kleine Massenströme bzw. auf niedrige Drehzahlen, also auf den Betriebsbereich der Brennkraftmaschine, der für die Warmlaufphase und die Tests zur Bestimmung der Abgasemissionen relevant ist, so dass die Brennkraftmaschine unter diesen Betriebsbedingungen sowohl ein verbessertes Emissionsverhalten aufweist als auch aufgeladen wird. Die Pumpgrenze wird dabei hin zu kleineren Verdichtermassenströmen verschoben, so dass auch bei kleinen und kleinsten Massenströmen hohe Ladedrücke erzielt werden können.

Das Absperrelement gestattet die Aufteilung des Gesamtabgasstromes in zwei Abgasteilströme, nämlich in einen Abgasteilstrom, der durch die Bypassleitung geführt wird, und einen Abgasteilstrom, der durch die Hochdruckturbine und das Abgasnachbehandlungssystem geleitet wird. Dies ermöglicht verschiedenste Vorgehensweisen. Mit zunehmendem Gesamtabgasstrom kann ein zunehmender Anteil des Gesamtabgasstroms durch die Bypassleitung geführt und direkt der Niederdruckturbine zugeführt werden. Ein Szenario, was sich insbesondere anbietet, sobald das stromabwärts der Niederdruckturbine angeordnete Abgasnachbehandlungssystem seine Betriebstemperatur erreicht hat.

Vorteilhaft sind Ausführungsformen der Brennkraftmaschine, bei denen das Absperrelement ein Ventil ist, wobei dieses Ventil elektrisch, hydraulisch, pneumatisch oder magnetisch steuerbar ist.

Vorteilhaft sind Ausführungsformen der Brennkraftmaschine, bei denen das Absperrelement eine Drosselklappe ist. Eine Drosselklappe ist zwar nicht geeignet die Bypassleitung vollständig zu verschließen, so dass auch bei geschlossener Drosselklappe ein Leckagestrom nie ganz vermieden werden kann. Dies erweist sich in der Praxis aber als unschädlich.

Vorteilhaft sind Ausführungsformen der Brennkraftmaschine, bei denen das zweite Abgasnachbehandlungssystem volumetrisch kleiner ist als das erste Abgasnachbehandlungssystem. Diese Ausführungsform trägt dem Umstand Rechnung, dass die Brennkraftmaschine nach einem Kaltstart bzw. in der Warmlaufphase im mittleren und unteren Teillastbereich bzw. bei geringen Drehzahlen d.h. bei kleinen Massenströmen betrieben wird und der in diesen Betriebszuständen durch die Abgasnachbehandlungssysteme geführte Abgasmassenstrom eine entsprechende Größenordnung aufweist. Da das zweite Abgasnachbehandlungssystem in erster Linie zum Zweck der Verbesserung des Emissionsverhaltens der Brennkraftmaschine in genau diesen Betriebzuständen vorgesehen wird, kann das zweite Abgasnachbehandlungssystem entsprechend dem in diesen Betriebzuständen vorliegenden und zu behandelnden Abgasmassenstrom dimensioniert werden.

An dieser Stelle sei angemerkt, dass die Hochdruckturbine vorzugsweise auf kleine Massenströme ausgelegt wird. Bei einem Dieselmotor wird der durch den Motor geförderte Massenstrom maßgeblich durch die Drehzahl bestimmt, so dass kleine Massenströme und niedrige Drehzahlen miteinander korrelieren. Für Ottomotoren sind die Massenströme bei niedrigen Lasten klein, da Ottomotoren im Gegensatz zu Dieselmotoren nicht über eine Qualitätsregelung sondern über eine Quantitätsregelung verfügen.

Vorteilhaft sind Ausführungsformen der Brennkraftmaschine, bei denen das Abgasnachbehandlungssystem ein Oxidationskatalysator ist. Ein Oxidationskatalysator, der zur Abgasnachbehandlung bei Dieselmotoren eingesetzt wird, weist zufriedenstellende Konvertierungsraten erst bei Erreichen einer bestimmten Temperatur auf, weshalb es im Hinblick auf ein verbessertes Emissionsverhalten zielführend ist, diesen Katalysator möglichst nahe an dem Auslass der Brennkraftmaschine anzuordnen, um die Aufwärmphase des Katalysators zu verkürzen.

Vorteilhaft sind Ausführungsformen der Brennkraftmaschine, bei denen das Abgasnachbehandlungssystem ein Rußfilter ist. Wie bereits in der Einleitung ausgeführt wurde, ist es erforderlich, den Filter von Zeit zu Zeit zu regenerieren, wobei die im Filter abgelagerten Rußpartikel im Rahmen der Regeneration des Filters intermittierend verbrannt werden. In der Regel wird die Verbrennung der Partikel durch eine gezielte Erhöhung der Abgastemperatur initiiert, was durch eine Nacheinspritzung von Kraftstoff in die Zylinder erfolgen kann. Im Hinblick auf die Regeneration des Filters ist somit eine motornahe Anordnung zielführend. Folglich bietet die erfmdungsgemäße Ausgestaltung der Brennkraftmaschine auch bei der Verwendung von Rußfiltern als Abgasnachbehandlungssystem Vorteile.

Vorteilhaft sind Ausführungsformen der Brennkraftmaschine, bei denen das Abgasnachbehandlungssystem ein Drei-Wege-Katalysator ist. Das für den Oxidationskatalysator Gesagte hat für den Drei-Wege-Katalysator ebenso Gültigkeit, weshalb auf diese Ausführungen Bezug genommen wird.

Vorteilhaft sind Ausführungsformen der Brennkraftmaschine, bei denen eine zweite Bypassleitung vorgesehen ist, die stromaufwärts des Verdichters des ersten Abgasturboladers von der Ansaugleitung abzweigt und stromabwärts des Verdichters des ersten Abgasturboladers wieder in die Ansaugleitung mündet, wobei in dieser zweiten Bypassleitung ein Absperrelement angeordnet ist.

Diese zweite Bypassleitung gestattet die Umgehung des Hochdruckverdichters. Dies ermöglicht die Abstimmung des durch den Hochdruckverdichter geführten Frischluftmassenstromes auf den durch die Hochdruckturbine geführten Abgasmassenstrom und damit an die zur Verfügung stehende Turbinenleistung.

Das Absperrelement gestattet die Aufteilung des Gesamtfrischluftstroms in zwei Teilströme, nämlich in einen Teilstrom, der durch die zweite Bypassleitung geführt wird, und einen Teilstrom, der durch den Hochdruckverdichter geleitet wird.

Vorteilhaft sind Ausführungsformen der Brennkraftmaschine, bei denen stromabwärts der Verdichter ein Ladeluftkühler in der Ansaugleitung angeordnet ist. Der Ladeluftkühler senkt die Lufttemperatur und steigert damit die Dichte der Luft, wodurch auch der Kühler zu einer besseren Füllung des Brennraums mit Luft d.h. zu einer größeren Luftmasse beiträgt.

Vorteilhaft sind Ausführungsformen der Brennkraftmaschine, bei denen die Turbine des ersten Abgasturboladers über eine variable Turbinengeometrie (VTG) verfügt. Eine variable Turbinengeometrie erhöht die Flexibilität der Aufladung. Sie gestattet eine stufenlose Anpassung der Turbinengeometrie an den jeweiligen Betriebspunkt der Brennkraftmaschine. Im Gegensatz zu einer Turbine mit fester Geometrie muss kein Kompromiss bei der Auslegung der Turbine eingegangen werden, um in sämtlichen Drehzahlbereichen eine mehr oder weniger zufriedenstellende Aufladung zu realisieren.

Vorteilhaft sind Ausführungsformen der Brennkraftmaschine, bei denen der Verdichter des ersten Abgasturboladers über eine variable Verdichtergeometrie (VVG) verfügt. Diese Ausführungsform ist insbesondere dann vorteilhaft, wenn die Turbine des ersten Abgasturboladers über eine variable Turbinengeometrie verfügt und die Verdichtergeometrie auf die Turbinengeometrie kontinuierlich abgestimmt wird.

Vorteilhaft sind Ausführungsformen der Brennkraftmaschine, bei denen die Turbine des zweiten Abgasturboladers über eine variable Turbinengeometrie (VTG) verfügt. Das zuvor Gesagte hat für die Turbine der Niederdruckstufe ebenso Gültigkeit, weshalb auf diese Ausführungen Bezug genommen wird.

Vorteilhaft sind Ausführungsformen der Brennkraftmaschine, bei denen zum Zwecke der Abgasabblasung eine dritte Bypassleitung vorgesehen ist, die stromaufwärts der Turbine des zweiten Abgasturboladers von der Abgasleitung abzweigt und stromaufwärts des ersten Abgasnachbehandlungssystems in die Abgasleitung wieder einmündet und mit der die Turbine des zweiten Abgasturboladers umgehbar ist, wobei zur Steuerung der Abgasabblasung ein Absperrelement in der dritten Bypassleitung vorgesehen ist.

Die zweite der Erfindung zugrunde liegende Teilaufgabe wird gelöst durch ein Verfahren zur Verbesserung des Emissionsverhaltens einer aufgeladenen Brennkraftmaschine der oben beschriebenen Art, die eine erste Bypassleitung aufweist, welche stromaufwärts der Turbine des ersten Abgasturboladers von der Abgasleitung abzweigt und stromabwärts des zweiten Abgasnachbehandlungssystems wieder in die Abgasleitung mündet und in dieser ersten Bypassleitung ein Absperrelement angeordnet ist, wobei das Verfahren dadurch gekennzeichnet ist, dass in der Warmlaufphase der Brennkraftmaschine bei kleinen Abgasmassenströmen d.h. im Teillastbereich bzw. bei niedrigen Drehzahlen der überwiegende Anteil des Abgasstromes durch die Turbine des ersten Abgasturboladers und das stromabwärts der Turbine vorgesehene zweite Abgasnachbehandlungssystem geleitet wird.

An dieser Stelle sei angemerkt, dass der Begriff "Teillastbereich" im Rahmen der vorliegenden Erfindung dahingehend zu verstehen ist, dass unter diesen Begriff zumindest das gesamte Lastkollektiv subsumiert wird, welches bei der Absolvierung der gesetzlich vorgeschriebenen Tests zur Bestimmung der Schadstoffemissionen durchlaufen wird.

Ähnlich verhält es sich mit den Begriff "niedrige Drehzahl". Darunter ist das gesamte Drehzahlband zu verstehen, welches bei der Absolvierung der gesetzlich vorgeschriebenen Tests zur Bestimmung der Schadstoffemissionen durchlaufen wird.

Der Begriff "kleine Massenströme" korrespondiert mit den beiden zuvor genannten und definierten Begriffen. Otto- und Dieselmotoren weisen hier ein unterschiedliches Verhalten auf. Während bei Ottomotoren kleine Massenströme bei niedrigen Lasten bzw. im Teillastbereich anfallen, sind die Massenströme bei Dieselmotoren drehzahlabhängig, so dass kleine Abgasmassenströme bei niedrigen Drehzahlen zu beobachten sind.

Das im Zusammenhang mit der erfindungsgemäßen Brennkraftmaschine Gesagte gilt ebenfalls für das erfmdungsgemäße Verfahren. Durch die Anordnung eines zweiten Abgasnachbehandlungssystems zwischen den Turbinen wird eine Optimierung des Emissionsverhaltens, insbesondere in der Warmlaufphase, ermöglicht, ohne dass dabei auf eine Aufladung verzichtet zu werden braucht. Zudem kann die Hochdruckturbine gezielt auf den für die Warmlaufphase relevanten Teillastbereich bzw. Drehzahlbereich d.h. auf kleine Abgasmassenströme ausgelegt werden, um auch bei kleinen Abgasmassenströmen hohe Ladedrücke zu realisieren. Dies kann beispielsweise mittels einer kleinen Turbine mit fester Turbinengeometrie oder aber mittels einer Turbine mit variabler Turbinengeometrie erreicht bzw. unterstützt werden.

Vorteilhaft sind Ausführungsformen des Verfahrens, bei denen in der Warmlaufphase der Brennkraftmaschine bei kleinen Abgasmassenströmen d.h. im Teillastbereich bzw. bei niedrigen Drehzahlen der Abgasstrom vollständig durch die Turbine des ersten Abgasturboladers und das stromabwärts der Turbine vorgesehene zweite Abgasnachbehandlungssystem geleitet wird. Hierzu wird das in der ersten Bypassleitung vorgesehene Absperrelement völlig geschlossen. Auf diese Weise kann die Enthalpie des gesamten Abgasstromes zur Verdichtung der Frischluft verwendet werden. Vorzugsweise wird dabei das in der zweiten Bypassleitung vorgesehene Absperrelement ebenfalls ganz geschlossen. Des weiteren wird dabei der gesamte Abgasstrom dem zweiten, nahe am Auslass der Brennkraftmaschine angeordnetem Abgasnachbehandlungssystem zugeführt und zur Aufheizung dieses Systems verwendet, so dass dieses System möglichst schnell seine Betriebstemperatur erreicht.

Vorteilhaft sind Ausführungsformen des Verfahrens, bei denen mit zunehmender Betriebstemperatur und/oder zunehmender Drehzahl und/oder zunehmender Last ein zunehmender Anteil des Abgasstromes über die erste Bypassleitung geleitet wird. Vorteile bietet dies insbesondere bei Hochdruckturbinen mit fester Turbinengeometrie, bei denen - im Gegensatz zu Turbinen mit variabler Turbinengeometrie - dem ansteigenden Abgasmassenstrom nur durch eine Abgasabblasung Rechnung getragen werden kann.

Vorteilhaft sind Ausführungsformen des Verfahrens, bei denen nach Erreichen der Betriebstemperatur des ersten Abgasnachbehandlungssystems mehr als 80% des Abgasstromes über die erste Bypassleitung geleitet wird. Der wesentliche Anteil des Abgasstroms wird an der Hochdruckturbine vorbei und direkt zur Niederdruckturbine geführt. Vorteile bietet dies insbesondere, wenn die Hochdruckturbine auf kleine Massenströme bzw. niedrige Lasten ausgelegt ist und das zweite Abgasnachbehandlungssystem nicht mehr zwingend zur Reduzierung der Schadstoffemissionen benötigt wird. Die Niederdruckturbine wird dabei auf hohe Lasten bzw. große Abgasmassenströme ausgelegt, so dass sich zwischen Hochdruckturbine und Niederdruckturbine in gewisser Weise eine Aufgabenteilung in der Art ergibt, dass der überwiegende Anteil des Abgasmassenstromes bei kleinen Abgasmassenströmen durch die Niederdruckturbine und bei großen Abgasmassenströmen durch die Hochdruckturbine geleitet wird.

Vorteilhaft sind Ausführungsformen des Verfahrens, bei denen beim Betrieb der Brennkraftmaschine immer ein Teil des Abgasstromes durch die Turbine des ersten Abgasturboladers und das stromabwärts der Turbine vorgesehene zweite Abgasnachbehandlungssystem geleitet wird.

Die Abgasströmung durch die Hochdruckturbine sollte nie ganz unterbunden werden, damit das Laufrad bzw. die Laufräder der Turbine ständig mit einer gewissen Mindestdrehzahl umlaufen. Vorteilhaft ist dies, da die Laufräder nach dem Stand der Technik mit Gleitlagern ausgestattet sind, und eine gewisse Drehzahl erforderlich ist, damit der hydrodynamische Schmierölfilm des Gleitlagers aufgebaut und aufrechterhalten wird. Auf diese Weise wird unter allen Betriebsbedingungen eine Flüssigkeitsreibung im Gleitlager sichergestellt, was günstig hinsichtlich des Verschleißes und der Lebensdauer bzw. der Funktionstüchtigkeit der Turbine ist.

Vorteilhaft sind bei Brennkraftmaschinen, die eine zweite Bypassleitung aufweisen, welche stromaufwärts des Verdichters des ersten Abgasturboladers von der Ansaugleitung abzweigt und stromabwärts des Verdichters des ersten Abgasturboladers wieder in die Ansaugleitung mündet und bei der in dieser zweiten Bypassleitung ein Absperrelement angeordnet ist, Ausführungsformen des Verfahrens, bei denen das in der zweiten Bypassleitung angeordnete Absperrelement in Abhängigkeit von der Stellposition des in der ersten Bypassleitung angeordneten Absperrelements gesteuert wird, so dass der durch den Verdichter des ersten Abgasturboladers geführte Verdichtermassenstrom dem durch die Turbine dieses Abgasturboladers geführten Abgasmassenstrom angepasst wird bzw. diese beiden Ströme aufeinander abgestimmt werden.

Vorteilhaft sind des weiteren bei Brennkraftmaschinen, die zum Zwecke der Abgasabblasung eine dritte Bypassleitung aufweisen, welche stromaufwärts der Turbine des zweiten Abgasturboladers von der Abgasleitung abzweigt und stromaufwärts des ersten Abgasnachbehandlungssystems in die Abgasleitung wieder einmündet und mit der die Turbine des zweiten Abgasturboladers umgehbar ist und bei der zur Steuerung der Abgasabblasung ein Absperrelement in der dritten Bypassleitung vorgesehen ist, Ausführungsformen des Verfahrens, bei denen mit zunehmender Last ein zunehmender Anteil des Abgasmassenstromes mittels der dritten Bypassleitung abgeblasen wird. Bei dieser Variante ist die Niederdruckturbine als Waste-Gate-Turbine ausgeführt.

Im folgenden wird die Erfindung anhand von sieben Ausführungsbeispielen gemäß den Figuren 1 bis 7 näher beschrieben. Hierbei zeigt:
- Fig. 1: schematisch eine erste Ausführungsform der Brennkraftmaschine,
- Fig. 2: schematisch eine zweite Ausführungsform der Brennkraftmaschine,
- Fig. 3: schematisch eine dritte Ausführungsform der Brennkraftmaschine,
- Fig. 4: schematisch eine vierte Ausführungsform der Brennkraftmaschine,
- Fig. 5: schematisch eine fünfte Ausführungsform der Brennkraftmaschine,
- Fig. 6: schematisch eine sechste Ausführungsform der Brennkraftmaschine, und
- Fig. 7: schematisch eine siebte Ausführungsform der Brennkraftmaschine.

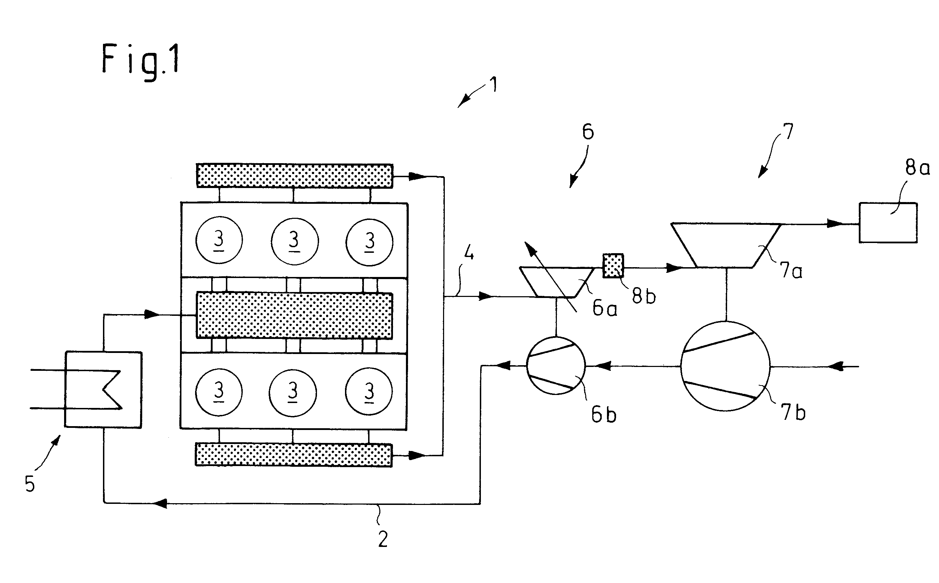

Figur 1 zeigt eine erste Ausführungsform der aufgeladenen Brennkraftmaschine 1 am Beispiel eines Sechs-Zylinder-V-Motors.

Die Brennkraftmaschine 1 verfügt über eine Ansaugleitung 2, welche die Zylinder 3 mit Frischluft versorgt, und des weiteren über eine Abgasleitung 4, welche zur Abführung der Verbrennungsgase bzw. des Abgases dient. Des weiteren ist die Brennkraftmaschine 1 mit zwei Abgasturboladern 6,7 ausgestattet, die in Reihe geschaltet sind, so dass einerseits der Abgasstrom zwei in der Abgasleitung 4 hintereinander angeordnete Turbinen 6a,7a durchströmt, wohingegen der Ladeluftstrom durch zwei in der Ansaugleitung 2 hintereinander angeordnete Verdichter 6b,7b geführt wird.

Ein erster, nahe am Auslass der Brennkraftmaschine 1 angeordneter Abgasturbolader 6 dient als Hochdruckstufe 6. Ein zweiter stromabwärts der Abgasleitung 4 bzw. stromaufwärts der Ansaugleitung 2 des ersten Abgasturboladers 6 angeordneter Abgasturbolader 7 dient als Niederdruckstufe 7.

Stromabwärts der Turbine 7a des zweiten Abgasturboladers 7 ist ein erstes Abgasnachbehandlungssystem 8a vorgesehen. Zusätzlich ist ein dem ersten Abgasnachbehandlungssystem 8a gleichartiges zweites Abgasnachbehandlungssystem 8b vorgesehen, das in der Abgasleitung 4 zwischen den beiden Turbinen 6a,7a der zwei Abgasturbolader 6,7 angeordnet ist und dadurch wesentlich näher am Auslass der Brennkraftmaschine 1 positioniert ist als das erste Abgasnachbehandlungssystem 8a.

Stromabwärts der Verdichter 6b,7b ist ein Ladeluftkühler 5 in der Ansaugleitung 2 angeordnet. Der Ladeluftkühler 5 senkt die Lufttemperatur und steigert damit die Dichte der Luft, wodurch auch der Kühler 5 zu einer besseren Füllung der Zylinder 3 mit Luft d.h. zu einer größeren Luftmasse beiträgt.

Bei dem in der Figur 1 dargestellten Ausführungsbeispiel verfügt die Turbine 6a des ersten Abgasturboladers 6 über eine variable Turbinengeometrie (VTG - kenntlich gemacht durch den Pfeil), die eine stufenlose Anpassung der Turbinengeometrie an den jeweiligen Betriebspunkt der Brennkraftmaschine 1 ermöglicht. Im Gegensatz zu einer Turbine mit fester Geometrie muss kein Kompromiss bei der Auslegung der Turbine eingegangen werden, um in sämtlichen Drehzahlbereichen eine mehr oder weniger zufriedenstellende Aufladung zu realisieren. Der Verdichter 6b der Hochdruckstufe 6 kann eine feste Geometrie aufweisen oder alternativ mit einer variablen Verdichtergeometrie ausgeführt sein.

Die Niederdruckturbine 7a weist eine feste Turbinengeometrie auf, kann aber grundsätzlich auch mit einer variablen Turbinengeometrie ausgeführt werden. Gleiches gilt für den Niederdruckverdichter 7b.

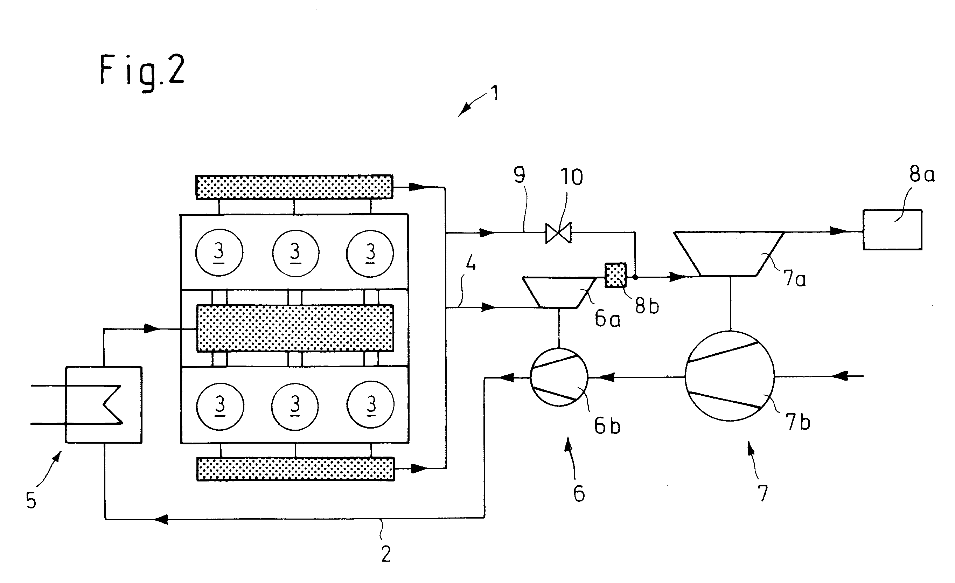

Figur 2 zeigt schematisch eine zweite Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 2 dargestellten Brennkraftmaschine 1 die Hochdruckturbine 6a mit einer festen d.h. unveränderlichen Turbinengeometrie ausgeführt. Zusätzlich ist eine erste Bypassleitung 9 vorgesehen, die stromaufwärts der Turbine 6a des ersten Abgasturboladers 6 von der Abgasleitung 4 abzweigt und stromabwärts des zweiten Abgasnachbehandlungssystems 8b wieder in die Abgasleitung 4 mündet, wobei in dieser ersten Bypassleitung 9 ein Absperrelement 10 angeordnet ist.

Die Bypassleitung 9 dient als Abgasabblaseleitung. Damit ist die Hochdruckturbine 6a ähnlich einer Waste-Gate-Turbine ausgebildet, wobei mittels der Bypassleitung 9 zusätzlich das zweite Abgasnachbehandlungssystem 8b umgangen werden kann. Das Absperrelement 10 gestattet die Aufteilung des Gesamtabgasstromes in zwei Abgasteilströme, nämlich in einen Abgasteilstrom, der durch die Bypassleitung 9 geführt wird, und einen Abgasteilstrom, der durch die Hochdruckturbine 6a und das zweite Abgasnachbehandlungssystem 8b geleitet wird.

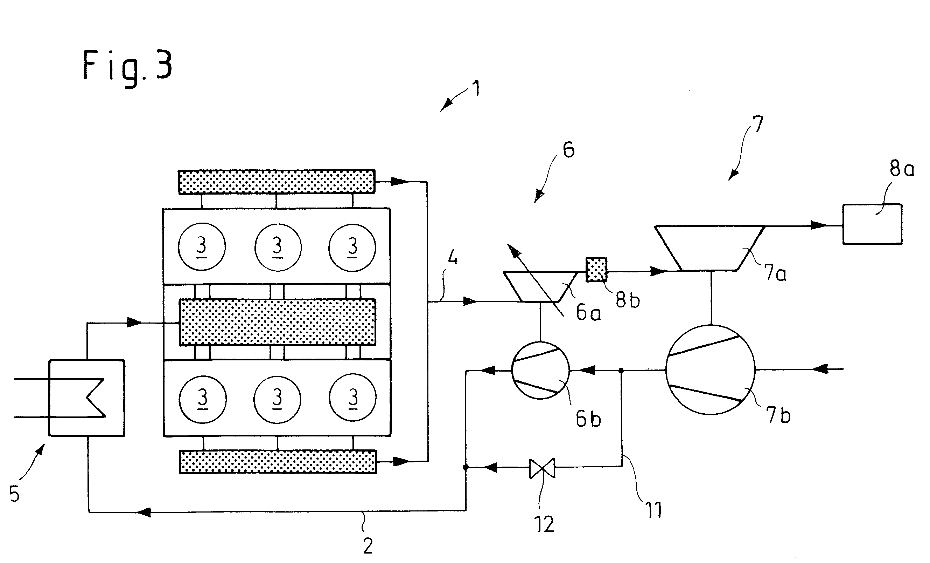

Figur 3 zeigt schematisch eine dritte Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 3 dargestellten Brennkraftmaschine 1 eine zweite Bypassleitung 11 vorgesehen, die stromaufwärts des Verdichters 6b des ersten Abgasturboladers 6 von der Ansaugleitung 2 abzweigt und stromabwärts des Verdichters 6b des ersten Abgasturboladers 6 wieder in die Ansaugleitung 2 mündet, wobei in dieser zweiten Bypassleitung 11 ein Absperrelement 12 angeordnet ist.

Die zweite Bypassleitung 11 gestattet die Umgehung des Hochdruckverdichters 6b. Dies ermöglicht die Abstimmung des durch den Hochdruckverdichter 6b geführten Frischluftmassenstromes auf den durch die Hochdruckturbine 6a geführten Abgasmassenstromes und damit eine Anpassung an die momentan zur Verfügung stehende Turbinenleistung.

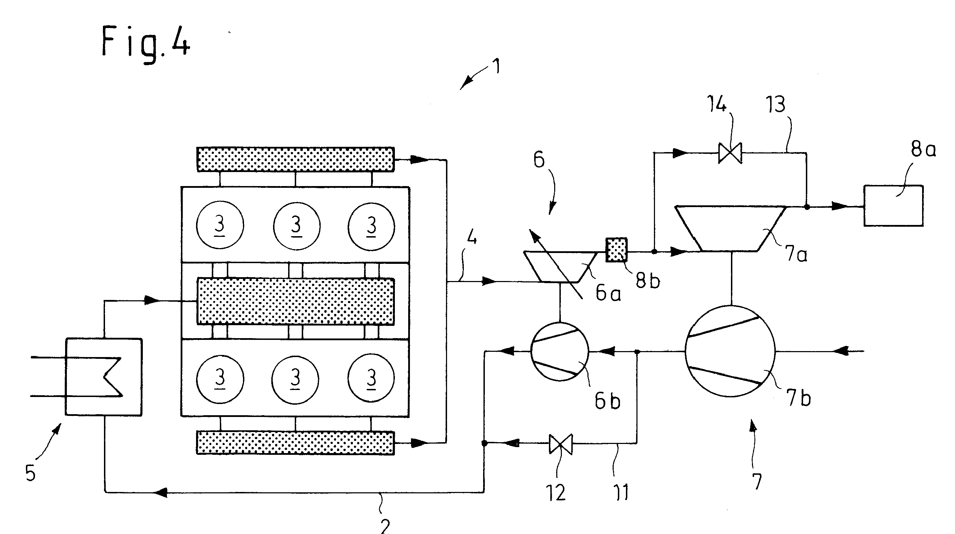

Figur 4 zeigt schematisch eine vierte Ausführungsform der aufgeladenen Brennkraftmaschine 1. Es sollen nur die Unterschiede zu der in Figur 3 dargestellten Ausführungsform erörtert werden, weshalb im übrigen bezug genommen wird auf Figur 3. Für dieselben Bauteile wurden dieselben Bezugszeichen verwendet.

Im Unterschied zu der in Figur 3 dargestellten Ausführungsform ist bei der in Figur 4 dargestellten Brennkraftmaschine 1 zum Zwecke der Abgasabblasung eine dritte Bypassleitung 13 vorgesehen, die stromaufwärts der Turbine 7a des zweiten Abgasturboladers 7 von der Abgasleitung 4 abzweigt und stromaufwärts des ersten Abgasnachbehandlungssystems 8a in die Abgasleitung 4 wieder einmündet und mit der die Turbine 7a des zweiten Abgasturboladers 7 umgehbar ist, wobei zur Steuerung der Abgasabblasung ein Absperrelement 14 in der dritten Bypassleitung 13 vorgesehen ist.

Damit ist die Niederdruckturbine 7a in Gestalt einer Waste-Gate-Turbine ausgebildet.

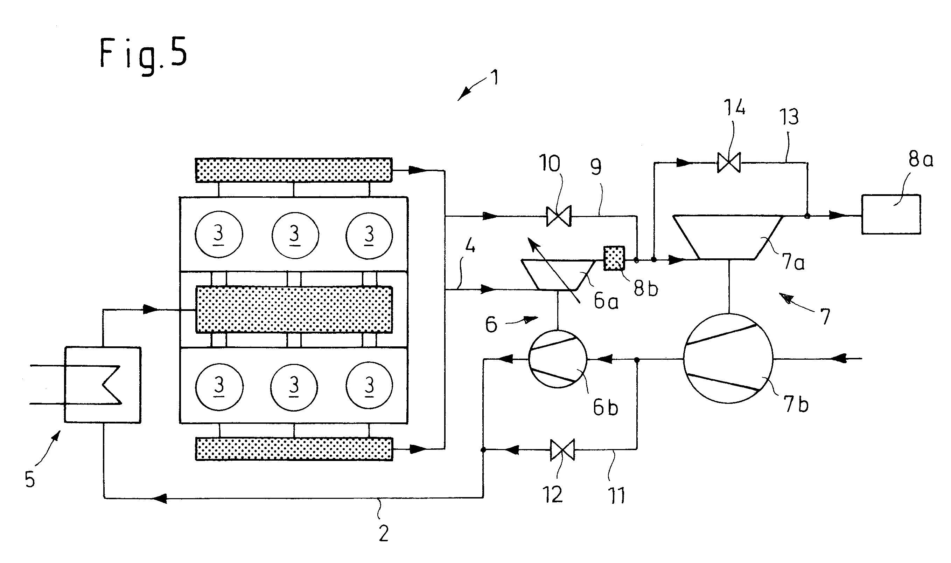

Figur 5 zeigt schematisch eine fünfte Ausführungsform der aufgeladenen Brennkraftmaschine 1. Es sollen nur die Unterschiede zu der in Figur 4 dargestellten Ausführungsform erörtert werden, weshalb im übrigen bezug genommen wird auf Figur 4. Für dieselben Bauteile wurden dieselben Bezugszeichen verwendet.

Im Unterschied zu der in Figur 4 dargestellten Ausführungsform ist bei der in Figur 5 dargestellten Brennkraftmaschine 1 zusätzlich eine erste Bypassleitung 9 vorgesehen, die stromaufwärts der Turbine 6a des ersten Abgasturboladers 6 von der Abgasleitung 4 abzweigt und stromabwärts des zweiten Abgasnachbehandlungssystems 8b wieder in die Abgasleitung 4 mündet, wobei in dieser ersten Bypassleitung 9 ein Absperrelement 10 angeordnet ist.

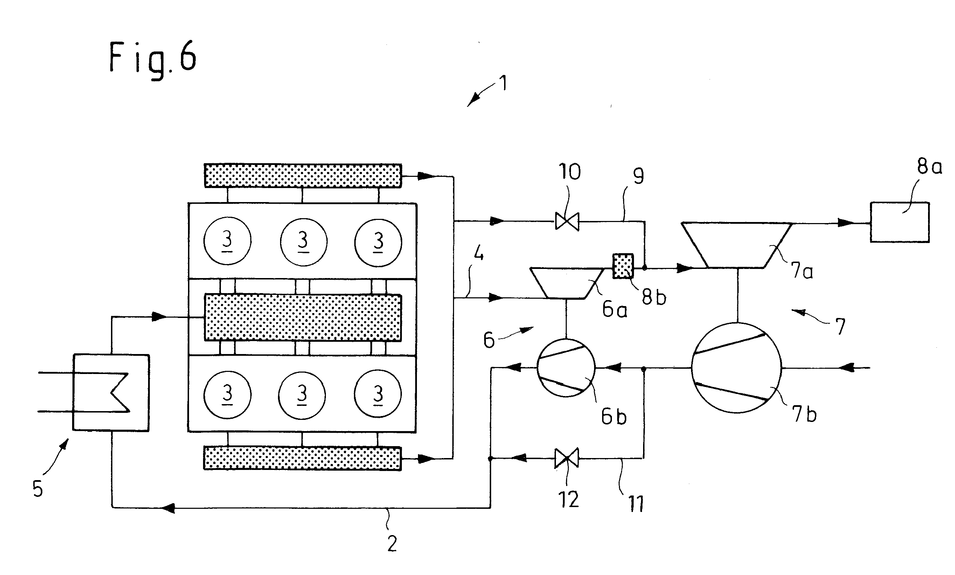

Figur 6 zeigt schematisch eine sechste Ausführungsform der aufgeladenen Brennkraftmaschine 1. Es sollen nur die Unterschiede zu der in Figur 2 dargestellten Ausführungsform erörtert werden, weshalb im übrigen bezug genommen wird auf Figur 2. Für dieselben Bauteile wurden dieselben Bezugszeichen verwendet.

Im Unterschied zu der in Figur 2 dargestellten Ausführungsform ist bei der in Figur 6 dargestellten Brennkraftmaschine 1 eine zweite Bypassleitung 11 vorgesehen, die stromaufwärts des Verdichters 6b des ersten Abgasturboladers 6 von der Ansaugleitung 2 abzweigt und stromabwärts des Verdichters 6b des ersten Abgasturboladers 6 wieder in die Ansaugleitung 2 mündet, wobei in dieser zweiten Bypassleitung 11 ein Absperrelement 12 angeordnet ist.

Die zweite Bypassleitung 11 gestattet die Umgehung des Hochdruckverdichters 6b. Dies ermöglicht die Abstimmung des durch den Hochdruckverdichter 6b geführten Frischluftmassenstromes auf den durch die Hochdruckturbine 6a geführten Abgasmassenstromes und damit eine Anpassung an die momentan zur Verfügung stehende Turbinenleistung.

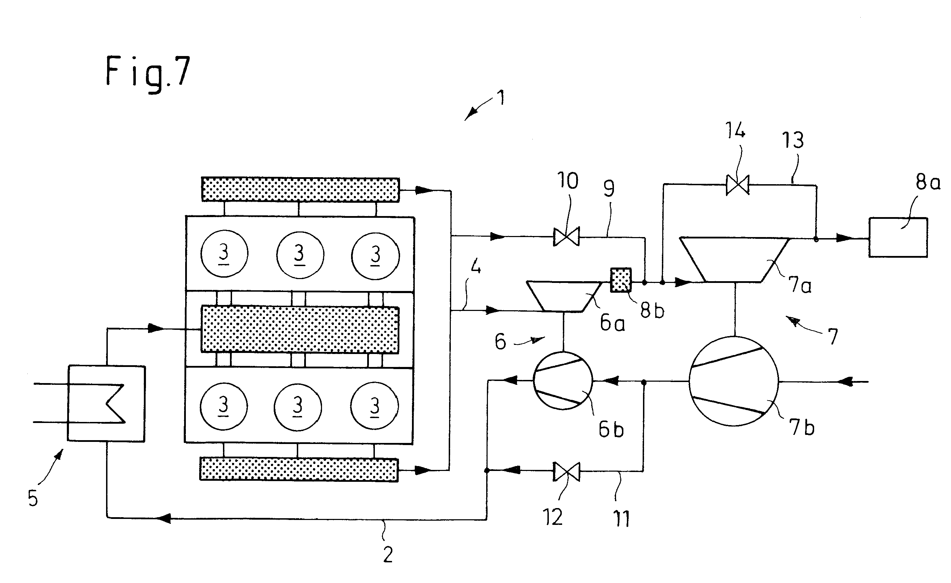

Figur 7 zeigt schematisch eine siebte Ausführungsform der aufgeladenen Brennkraftmaschine 1. Es sollen nur die Unterschiede zu der in Figur 6 dargestellten Ausführungsform erörtert werden, weshalb im übrigen bezug genommen wird auf Figur 6. Für dieselben Bauteile wurden dieselben Bezugszeichen verwendet.
Im Unterschied zu der in Figur 6 dargestellten Ausführungsform ist bei der in Figur 7 dargestellten Brennkraftmaschine 1 zum Zwecke der Abgasabblasung eine dritte Bypassleitung 13 vorgesehen, die stromaufwärts der Turbine 7a des zweiten Abgasturboladers 7 von der Abgasleitung 4 abzweigt und stromaufwärts des ersten Abgasnachbehandlungssystems 8a in die Abgasleitung 4 wieder einmündet und mit der die Turbine 7a des zweiten Abgasturboladers 7 umgehbar ist, wobei zur Steuerung der Abgasabblasung ein Absperrelement 14 in der dritten Bypassleitung 13 vorgesehen ist.

### Bezugszeichen

- 1: aufgeladene Brennkraftmaschine
- 2: Ansaugleitung
- 3: Zylinder
- 4: Abgasleitung
- 5: Ladeluftkühler
- 6: erster Abgasturbolader, Hochdruckstufe
- 6a: Hochdruckturbine
- 6b: Hochdruckverdichter
- 7: zweiter Abgasturbolader, Niederdruckstufe
- 7a: Niederdruckturbine
- 7b: Niederruckverdichter
- 8a: erstes Abgasnachbehandlungssystem
- 8b: zweites Abgasnachbehandlungssystem
- 9: erste Bypassleitung
- 10: Absperrelement
- 11: zweite Bypassleitung
- 12: Absperrelement
- 13: dritte Bypassleitung
- 14: Absperrelement

## Patentansprüche

1. Aufgeladene Brennkraftmaschine (1) mit einer Ansaugleitung (2) zur Versorgung mit Frischluft und einer Abgasleitung (4) zur Abführung des Abgases und mit mindestens zwei in Reihe geschalteten Abgasturboladern (6,7), die jeweils eine in der Abgasleitung (4) angeordnete Turbine (6a,7a) und einen in der Ansaugleitung (2) angeordneten Verdichter (6b,7b) umfassen und von denen ein erster Abgasturbolader (6) als Hochdruckstufe (6) dient und ein zweiter stromabwärts der Abgasleitung (4) bzw. stromaufwärts der Ansaugleitung (2) des ersten Abgasturboladers (6) angeordneter Abgasturbolader (7) als Niederdruckstufe (7) dient, wobei stromabwärts der Turbine (7a) des zweiten Abgasturboladers (7) ein erstes Abgasnachbehandlungssystem (8a) vorgesehen ist und zusätzlich ein gleichartiges zweites Abgasnachbehandlungssystem (8b) vorgesehen ist, **dadurch gekennzeichnet, dass** das zweite Abgasnachbehandlungssystem (8b) in der Abgasleitung (4) zwischen den beiden Turbinen (6a,7a) der mindestens zwei Abgasturbolader (6,7) angeordnet ist.

2. Aufgeladene Brennkraftmaschine (1) nach Anspruch 1, **dadurch gekennzeichnet, dass** eine erste Bypassleitung (9) vorgesehen ist, die stromaufwärts der Turbine (6a) des ersten Abgasturboladers (6) von der Abgasleitung (4) abzweigt und stromabwärts des zweiten Abgasnachbehandlungssystems (8b) wieder in die Abgasleitung (4) mündet, wobei in dieser ersten Bypassleitung (9) ein Absperrelement (10) angeordnet ist.

3. Aufgeladene Brennkraftmaschine (1) nach Anspruch 2, **dadurch gekennzeichnet, dass** das Absperrelement (10) ein Ventil ist.

4. Aufgeladene Brennkraftmaschine (1) nach Anspruch 2, **dadurch gekennzeichnet, dass** das Absperrelement (10) eine Drosselklappe ist.

5. Aufgeladene Brennkraftmaschine (1) nach einem der vorherigen Ansprüche, **dadurch gekennzeichnet, dass** das zweite Abgasnachbehandlungssystem (8b) volumetrisch kleiner ist als das erste Abgasnachbehandlungssystem (8a).

6. Aufgeladene Brennkraftmaschine (1) nach einem der vorherigen Ansprüche, **dadurch gekennzeichnet, dass** das Abgasnachbehandlungssystem (8a,8b) ein Oxidationskatalysator ist.

7. Aufgeladene Brennkraftmaschine (1) nach einem der vorherigen Ansprüche, **dadurch gekennzeichnet, dass** das Abgasnachbehandlungssystem (8a,8b) ein Rußfilter ist.

8. Aufgeladene Brennkraftmaschine (1) nach einem der vorherigen Ansprüche, **dadurch gekennzeichnet, dass** das Abgasnachbehandlungssystem (8a,8b) ein Drei-Wege-Katalysator ist.

9. Aufgeladene Brennkraftmaschine (1) nach einem der vorherigen Ansprüche, **dadurch gekennzeichnet, dass** eine zweite Bypassleitung (11) vorgesehen ist, die stromaufwärts des Verdichters (6b) des ersten Abgasturboladers (6) von der Ansaugleitung (2) abzweigt und stromabwärts des Verdichters (6b) des ersten Abgasturboladers (6) wieder in die Ansaugleitung (2) mündet, wobei in dieser zweiten Bypassleitung (11) ein Absperrelement (12) angeordnet ist.

10. Aufgeladene Brennkraftmaschine (1) nach einem der vorherigen Ansprüche, **dadurch gekennzeichnet, dass** stromabwärts der Verdichter (6b,7b) ein Ladeluftkühler (5) in der Ansaugleitung (2) angeordnet ist.

11. Aufgeladene Brennkraftmaschine (1) nach einem der vorherigen Ansprüche, **dadurch gekennzeichnet, dass** die Turbine (6a) des ersten Abgasturboladers (6) über eine variable Turbinengeometrie verfügt.

12. Aufgeladene Brennkraftmaschine (1) nach einem der vorherigen Ansprüche, **dadurch gekennzeichnet, dass** der Verdichter (6b) des ersten Abgasturboladers (6) über eine variable Verdichtergeometrie verfügt.

13. Aufgeladene Brennkraftmaschine (1) nach einem der vorherigen Ansprüche, **dadurch gekennzeichnet, dass** die Turbine (7a) des zweiten Abgasturboladers (7b) über eine variable Turbinengeometrie verfügt.

14. Aufgeladene Brennkraftmaschine (1) nach einem der vorherigen Ansprüche, **dadurch gekennzeichnet, dass** zum Zwecke der Abgasabblasung eine dritte Bypassleitung (13) vorgesehen ist, die stromaufwärts der Turbine (7a) des zweiten Abgasturboladers (7) von der Abgasleitung (4) abzweigt und stromaufwärts des ersten Abgasnachbehandlungssystems (8a) in die Abgasleitung (4) wieder einmündet und mit der die Turbine (7a) des zweiten Abgasturboladers (7) umgehbar ist, wobei zur Steuerung der Abgasabblasung ein Absperrelement (14) in der dritten Bypassleitung (13) vorgesehen ist.

15. Verfahren zur Verbesserung des Emissionsverhaltens einer aufgeladenen Brennkraftmaschine (1) nach einem der Ansprüche 2 bis 14, **dadurch gekennzeichnet, dass** in der Warmlaufphase der Brennkraftmaschine (1) bei kleinen Abgasmassenströmen d.h. im Teillastbereich bzw. bei niedrigen Drehzahlen der überwiegende Anteil des Abgasstromes durch die Turbine (6a) des ersten Abgasturboladers (6) und das stromabwärts der Turbine (6a) vorgesehene zweite Abgasnachbehandlungssystem (8b) geleitet wird.

16. Verfahren nach Anspruch 15, **dadurch gekennzeichnet, dass** in der Warmlaufphase der Brennkraftmaschine (1) bei kleinen Abgasmassenströmen d.h. im Teillastbereich bzw. bei niedrigen Drehzahlen der Abgasstrom vollständig durch die Turbine (6a) des ersten Abgasturboladers (6) und das stromabwärts der Turbine (6a) vorgesehene zweite Abgasnachbehandlungssystem (8b) geleitet wird.

17. Verfahren nach Anspruch 15, **dadurch gekennzeichnet, dass** mit zunehmender Betriebstemperatur und/oder zunehmender Drehzahl und/oder zunehmender Last ein zunehmender Anteil des Abgasstromes über die erste Bypassleitung (9) geleitet wird.

18. Verfahren nach einem der Ansprüche 15 bis 17, **dadurch gekennzeichnet, dass** nach Erreichen der Anspringtemperatur des ersten Abgasnachbehandlungssystems (8a) mehr als 80% des Abgasstromes über die erste Bypassleitung (9) geleitet wird.

19. Verfahren nach einem der Ansprüche 15 bis 18, **dadurch gekennzeichnet, dass** beim Betrieb der Brennkraftmaschine (1) immer ein Teil des Abgasstromes durch die Turbine (6a) des ersten Abgasturboladers (6) und das stromabwärts der Turbine (6a) vorgesehene zweite Abgasnachbehandlungssystem (8b) geleitet wird.

20. Verfahren nach einem der Ansprüche 15 bis 19 zur Verbesserung des Emissionsverhaltens einer aufgeladenen Brennkraftmaschine (1) nach einem der Ansprüche 9 bis 14, **dadurch gekennzeichnet, dass** das in der zweiten Bypassleitung (11) angeordnete Absperrelement (12) in Abhängigkeit von der Stellposition des in der ersten Bypassleitung (9) angeordneten Absperrelements (10) gesteuert wird, so dass der durch den Verdichter (6b) des ersten Abgasturboladers (6) geführte Verdichtermassenstrom dem durch die Turbine (6a) dieses Abgasturboladers (6) geführten Abgasmassenstrom angepasst wird.

21. Verfahren nach einem der Ansprüche 15 bis 19 zur Verbesserung des Emissionsverhaltens einer aufgeladenen Brennkraftmaschine (1) nach einem der Anspruch 14, **dadurch gekennzeichnet, dass** mit zunehmendem Abgasmassenstrom d.h. mit zunehmender Last bzw. zunehmender Drehzahl ein zunehmender Anteil des Abgasmassenstromes mittels der dritten Bypassleitung (13) abgeblasen wird.
